(19) Europäisches Patentamt
European Patent Office
Office européen des brevets

(11) Veröffentlichungsnummer: **0 044 929**
**B1**

# (12) EUROPÄISCHE PATENTSCHRIFT

(45) Veröffentlichungstag der Patentschrift: **07.09.83**

(51) Int. Cl.³: **A 01 J 7/00**

(21) Anmeldenummer: **81104535.0**

(22) Anmeldetag: **12.06.81**

(54) **Verfahren und Vorrichtung zur Milchübernahme.**

(30) Priorität: **05.07.80 DE 3025502**

(43) Veröffentlichungstag der Anmeldung: **03.02.82 Patentblatt 82/5**

(45) Bekanntmachung des Hinweises auf die Patenterteilung: **07.09.83 Patentblatt 83/36**

(84) Benannte Vertragsstaaten: **AT BE CH DE FR IT LI NL**

(56) Entgegenhaltungen:
**AT-B-315 559**
**BE-A-668 609**
**DE-A-2 249 170**
**DE-B-1 255 381**
**DE-C-869 884**
**DE-U-1 636 101**
**DE-U-1 794 617**
**US-A-3 116 714**

(73) Patentinhaber: **Alfons Schwarte GmbH, Theodor-Schwarte-Strasse 61, D-4730 Ahlen i.W. (DE)**

(72) Erfinder: **Eismann, Josef, Ing. grad., Schiege 6, D-4730 Ahlen 5 (DE)**

(74) Vertreter: **Busse & Busse Patentanwälte, Postfach 1226 Grosshandelsring 6, D-4500 Osnabrück (DE)**

**EP 0 044 929 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren und Vorrichtung zur Milchübernahme

Die Erfindung bezieht sich auf ein Verfahren nach dem Oberbegriff des Patentanspruchs 1. Bei bekannten Verfahren dieser Art wird die den Milchübernahmevorgang beendende Förderung der Milch aus dem Luftabscheiderbehälter in Abhängigkeit vom Niveau des Milchspiegels der im Luftabscheiderbehälter enthaltenen Milch dann abgebrochen, wenn der sinkende Milchspiegel eine Eichstellung innerhalb des Eichbereiches des Luftabscheiderbehälters erreicht.

Bei mit hohen Übernahmeleistungen ablaufenden Verfahren dieser Art und insbesondere bei für die Übernahme wechselnd großer Annahmemindestmengen Anwendung findenden Verfahren, bei deren Durchführung großvolumige Luftabscheiderbehälter zum Einsatz kommen, die einen in ihrem oberen Bereich vorgesehenen Eichbereich aufweisen, befindet sich im Luftabscheiderbehälter zum Zeitpunkt des Abbruchs der Förderung aus dem Luftabscheiderbehälter eine verhältnismäßig große Milchmenge im Luftabscheider, die in diesem auch bis zum Beginn des nächsten Milchübernahmevorgangs verbleibt. Zum Zeitpunkt des Abbrechens der Förderung von Milch aus dem Luftabscheiderbehälter kann sich aus zahlreichen Gründen noch verhältnismäßig viel Luft in der verbleibenden Milchmenge bfinden mit der Folge, daß der Milchspiegel zum Zeitpunkt des Abbruchs der Förderung eine Niveauhöhe im Luftabscheiderbehälter hat, die größer ist als jene, welche der Milchspiegel einnehmen würde, wenn die Restmilchmenge im Luftabscheiderbehälter vollständig entgast wäre. Daher muß bei den bekannten Verfahren dafür Sorge getragen werden, daß zumindest im Zeitpunkt der Beendigung des Milchübernahmevorganges durch Abbruch der Förderung von Milch aus dem Luftabscheiderbehälter die in diesem enthaltene Restmilchmenge vollständig entgast ist, damit der für den Abbruch der Förderung maßgebliche Milchspiegel seine Eichstellung im Eichbereich des Luftabscheiderbehälters behält. Dies wird in der Praxis dadurch herbeigeführt, daß gegen Ende des Milchübernahmevorganges die Förderleistung herabgesetzt wird, um durch Verminderung der abwärts gerichteten Strömungsgeschwindigkeit der Milch im Luftabscheiderbehälter deren vollständige Entgasung über die gesamte Niveauhöhe herbeizuführen. Dies mindert die Übernahmeleistung bezogen auf eine zu übernehmende Milchmenge, da durch die Herabsetzung der Förderleistung die Übernahmezeit verlängert wird. Bei den heutzutage üblichen hohen Förderleistungen, bei Übernahme von Milch mit verhältnismäßig niedrigen Temperaturen etc. erlangt dieser Zeitverlust vielfach eine unerwünschte Größenordnung.

Das Verfahren nach der Erfindung schafft hier Abhilfe durch die Merkmale des Patentanspruchs 1. Das Verfahren nach der Erfindung ermöglicht eine Milchübernahme mit hoher, durch Wartezeiten nicht beeinträchtigter Übernahmeleistung, bei der Meßfehler wirksam vermieden sind.

Infolge des den Milchübernahmevorgang beendenden Abbruchs der Förderung aus dem Luftabscheiderbehälter in Abhängigkeit von einem Mindestwert der Masse der im Luftabscheider enthaltenen Restmilch ist der Einfluß in der Restmilch noch enthaltener Luft auf den Schaltvorgang ausgeschlossen, so daß eine Herabsetzung der Fördergeschwindigkeit gegen Ende des Milchübernahmevorganges nicht mehr zwingend geboten ist. Auch werden Meßfehler, die durch eine nicht ausreichende Entgasung der Restmilchmenge und dadurch nach Beendigung des Milchübernahmevorganges eintretende Volumenverminderungen der Restmilchmenge bedingt sein können, zuverlässig vermieden.

Die Erfindung bezieht sich ferner auf eine Vorrichtung zur Übernahme von Milch gemäß dem Oberbegriff des Patentanspruchs 3.

Bekannte Vorrichtungen dieser Art (DE-C-1 193 379 und DE-U-1 794 617) arbeiten nach dem eingangs beschriebenen Verfahren und rufen dementsprechend die in diesem Zusammenhang erörterten Probleme hervor.

Die Vorrichtung nach der Erfindung schafft hier Abhilfe durch eine Ausbildung mit den Merkmalen des Patentanspruchs 3. Hinsichtlich weiterer Ausgestaltungen wird auf die Unteransprüche verwiesen.

Die Vorrichtung nach der Erfindung erbringt mit einfachsten baulichen Mitteln eine Beendigung der Milchförderung aus dem Luftabscheider am Ende eines Milchübernahmevorganges unabhängig von etwa noch in der Restmilch im Luftabscheiderbehälter enthaltener Luft, da der Schwimmer densimetrisch die Masse zumindest der im Hauptteil des Luftabscheiderbehälters enthaltenen nicht entgasten Milch zumindest in einer Zeitspanne kurz vor Beendigung des Milchübernahmevorganges fortlaufend ermittelt und seine untere Steuerendstellung in Abhängigkeit von dem Erreichen eines Mindestwertes der Masse der densimetrisch erfaßten Milch erreicht. Dabei ist die Übernahmevorrichtung unabhängig von einer bestimmten Formgestalt des Luftabscheiderbehälters.

Verfahren und Vorrichtung nach der Erfindung werden nachfolgend anhand von zwei bevorzugten praktischen Ausführungsbeispielen näher erläutert, die schematisch in der Zeichnung veranschaulicht sind. Es zeigen

Fig. 1 eine erste Ausführung eines Luftabscheiders einer erfindungsgemäßen Milchübernahmevorrichtung in einem vereinfachten Axialschnitt, und

Fig. 2 eine zweite Ausführung eines Luftabscheiders in einer Darstellung ähnlich Fig. 1.

Der in der Zeichnung veranschaulichte Luftabscheider 1 bildet Bestandteil einer nicht näher veranschaulichten Vorrichtung zur Übernahme von Milch aus Milchbehältern in Milchsammelbehälter, die üblicherweise aus einer in eine Übernahmeleitung eingeschalteten Pumpe, dem Luftabscheider 1 und einem Durchlaufzähler in Förderrichtung hinter dem Luftabscheider 1 besteht. Die Pumpe kann dabei vor oder hinter dem Luftabscheider 1 Anordnung finden und ist vorzugsweise als selbstansaugende Pumpe ausgebildet.

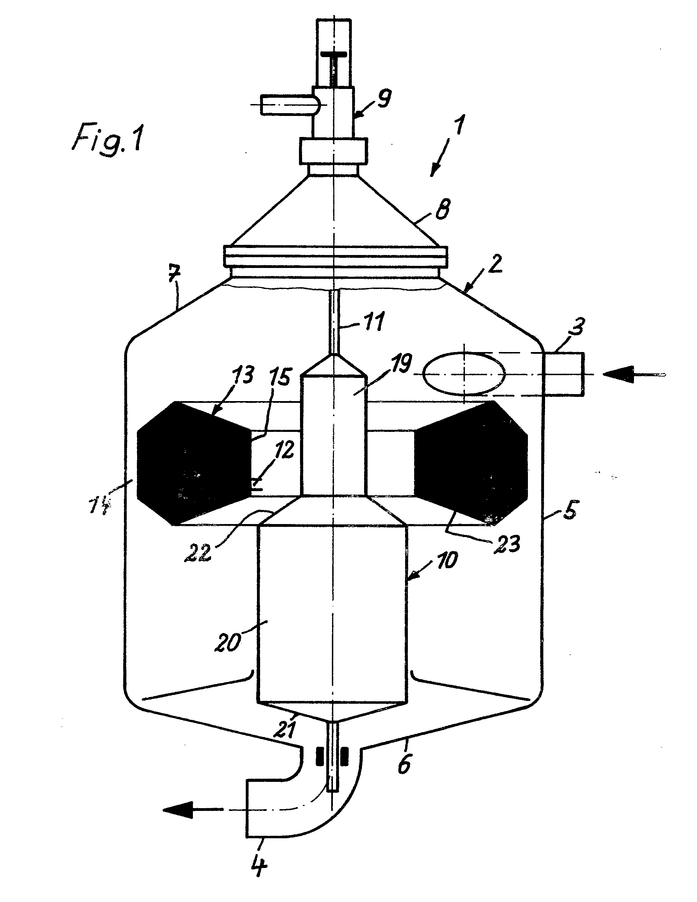

Der Luftabscheider besteht aus einem Luftabscheiderbehälter 2, in dessen oberen Teil eine Zuleitung 3 für Milch aus einem Milchbehälter einmündet und aus dessen unteren Teil die zum Durchlaufzähler führende Förderleitung 4 ausmündet. Der in Fig. 1 veranschaulichte Luftabscheiderbehälter 2 besitzt einen zylindrischen Hauptteil 5, einen leicht kegelig bzw. trichterförmig zulaufenden Bodenteil 6 und einen seinerseits sich nach oben hin kegelig verjüngenden Oberteil 7, auf den ein Deckel 8 als Verschluß für eine Zugangsöffnung aufgesetzt ist. Am oberen Ende des Deckels 8 befindet sich ein Entlüftungsventil 9 irgendeiner geeigneten Ausführung, das den Luftraum über im Luftabscheiderbehälter 2 enthaltener Milch zur Umgebung hin verbinden oder abschließen kann.

Im Luftabscheiderbehälter 2 ist bei den dargestellten Beispielen koaxial ein Schwimmer 10 angeordnet, der im Luftabscheiderbehälter 2 begrenzt auf- und abbeweglich geführt ist. Dieser Schwimmer 10 führt bei Erreichen einer vorgegebenen unteren Steuerendstellung eine Beendigung der Milchförderung aus dem Luftabscheider herbei. Dies kann wie bei den dargestellten Ausführungsbeispielen mittels einer Schwimmerstange 11 erfolgen, durch die der Schwimmer 10 das Entlüftungsventil 9 unmittelbar betätigt. Dies kann aber auch dadurch geschehen, daß der Schwimmer 10 nicht dargestellte elektrische Schalter z. B. mit Hilfe seiner Schwimmerstange 11 betätigt oder deren Betätigung auslöst. Dies kann schließlich auch dadurch geschehen, daß über den Schwimmer, z. B. mittels eines diesem zugeordneten Magneten, elektrische Schalter gesteuert werden, die einen Elektroantrieb für das Entlüftungsventil und/oder für die Pumpe und/oder ein Ventil in der Übernahme- bzw. Förderleitung vor oder hinter dem Luftabsheiderbehälter 2 betätigen.

Die dargestellten Ausführungsbeispiele eines Luftabscheiders 1 finden eine Anordnung zwischen der Pumpe in der Übernahmeleitung und dem Durchlaufzähler, so daß die Milch in Abhängigkeit von einem im Luftabscheider 1 herrschenden Förderdruck aus dem Luftabscheiderbehälter 2 herausgedrückt wird. Der Förderdruck im Luftabscheiderbehälter 2 steigt dabei bei Beginn eines Übernahmevorganges von Atmosphärendruck auf Pumpendruck an und wird am Ende des Milchübernahmevorganges von Pumpendruck auf Atmosphärendruck abgebaut, wobei der Druckauf- und -abbau durch Schließen bzw. Öffnen des Entlüftungsventils 9 vorgenommen wird.

Die Luftabscheider nach den Ausführungsbeispielen weisen einen im oberen Zweidrittelbereich der Höhe des Luftabscheiders 1 vorgesehenen, bei 12 angedeuteten Eichbereich auf, der sich in einem Bereich des Luftabscheiderbehälters 2 mit verringerter lichter, von Milch durchströmbarer Querschnittsfläche befindet. Dieser Bereich verringerter Querschnittsfläche wird bei dem Ausführungsbeispiel nach Fig. 1 von einem in den Luftabscheiderbehälter 2 eingesetzten Verdrängerkörper 13 gebildet, der mit der Wand des Luftabscheiderbehälters 2 einen äußeren Durchtrittskanal 14 für Milch begrenzt und eine Durchlaßöffnung 15 umgrenzt, die zumindest über die Höhe des Eichbereiches 12 eine gleichbleibende Querschnittsfläche besitzt. Der Verdrängerkörper 13 bildet in der dargestellten Ausführung einen Ringkörper, der sich koaxial im Hauptteil 5 des Luftabscheiderbehälters 2 abstützt. Geeignete Abstützmittel hierfür sind bekannt und nicht dargestellt.

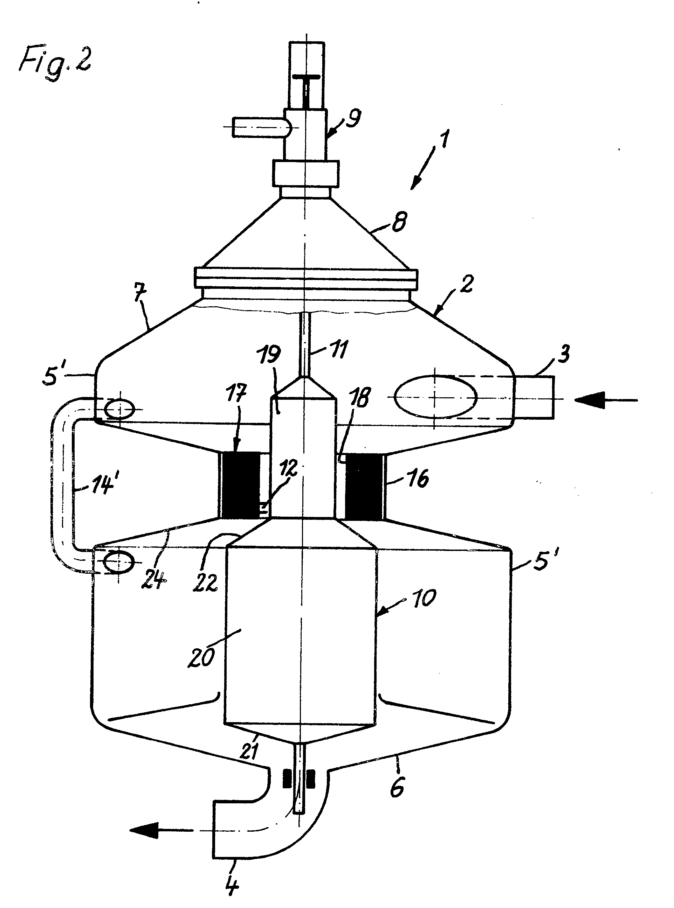

Im Gegensatz dazu ist bei dem Ausführungsbeispiel nach Fig. 2 zur Bildung des Bereiches verringerter Querschnittsfläche der Luftabscheiderbehälter 2 im Bereich seines Hauptteils 5' mit einer Wandeinziehung 16 versehen, die ihrerseits eine Durchlaßöffnung umgrenzen kann, welche zumindest über die Höhe des Eichbereiches eine gleichbleibende Querschnittsfläche besitzt. Bei dem dargestellten Beispiel nach Fig. 2 ist jedoch in Höhe der Wandeinziehung 16 ein die lichte, von Milch durchströmbare Querschnittsfläche des Luftabscheiderbehälters 2 herabsetzender zusätzlicher Verdrängerkörper 17 eingesetzt, der seinerseits die wirksame Durchlaßöffnung 18 für Milch umgrenzt, welche über ihre gesamte Höhe und damit über die Höhe des Eichbereiches 12 eine gleichbleibende Querschnittsfläche besitzt. Der oberhalb der Wandeinziehung 16 gelegene Bereich des Luftabscheiderbehälters 2 ist mit dessen unterhalb der Wandeinziehung 16 gelegenen Bereich durch einen die Wandeinziehung 16 umgehenden Strömungskanal 14' verbunden.

Zumindest in der Steuerendstellung des Schwimmers 10 zum Zeitpunkt der Beendigung der Milchförderung ist das Verhältnis der Querschnittsfläche des Schwimmers zu der von Milch durchströmbaren lichten Querschnittsfläche des Luftabscheiderbehälters 2 in allen Querschnittsebenen des vom Schwimmer zumindest in nicht vollständig entgaster Milch eingenommenen Höhenbereiches gleich oder im wesentlichen gleich. Dabei reicht der Schwimmer 10 mit seinem unteren Teil 20 bis in den unteren Bereich des Hauptteils 5, 5' des Luftabscheiderbehälters 2 herab, während er mit seinem oberen Teil 19 über den höchst erreichbaren Milchspiegel zum Zeitpunkt der Beendigung der Milchförderung vorsteht.

Entsprechend der Formgestalt des Luftabscheiderbehälters 2 mit einem Hauptteil 5, der eine über seine Höhe gleichbleibende, sich lediglich im Bereich des Verdrängerkörpers 13 ändernde, von Milch durchströmbare Querschnittsfläche aufweist, besitzt der Schwimmer 10 einen zylindrischen, seinerseits in seiner Querschnittsfläche gleichbleibenden unteren Teil 20, der unterseitig in einen Kegelteil 21 übergeht, der das obige Querschnittsverhältnis auch in Höhe von Querschnittsebenen durch den Bodenteil 6 des Luftabscheiderbehälters 2 sichert. Der obere Teil 19 des Schwimmers ist in seinem Durchmesser wesentlich verringert, entsprechend der über die Höhe querschnittsgleichen Form der Durchlaßöffnung 15 zylindrisch und erfüllt seinerseits das oben angeführte Verhältnis der Querschnittsflächen, wobei die lichte, von Milch durchströmbare Querschnittsfläche in Höhe der Durchlaßöffnung 15 bestimmt wird durch die Summe der Querschnittsflächen des Durchlaßkanals 14 und der Durchlaßöffnung 15.

Zwischen dem oberen Teil 19 und dem unteren Teil 20 des Schwimmers 10 befindet sich ein Übergangsteil 22, dessen Kegelstumpfform das Verhältnis der Querschnittsflächen unter Berücksichtigung der Schrägneigung der Unterseite 23 des Verdrängerkörpers 13 sichert. Eine entsprechende Formgestalt hat auch der Schwimmer 10 beim Ausführungsbeispiel nach Fig. 2, wobei dort der Übergangsteil 22 die Schrägneigung der unteren Wand 24 der Wandeinziehung 16 berücksichtigt.

Zu Beginn eines Milchübernahmevorganges befindet sich Milch, in der Regel Restmilch aus einem vorhergehenden Übernahmevorgang, im Luftabscheiderbehälter 2, wobei sich der obere Milchspiegel in Höhe des Eichbereiches 12 befindet. Tritt nun zu übernehmende Milch über die Übernahmeleitung 3, die tangential einmündet, in den Luftabscheiderbehälter 2 ein, so steigt der Milchspiegel an. Der sich dementsprechend aufwärts bewegende Schwimmer 10 schließt das Entlüftungsventil 9, so daß sich bei den vorstehend beschriebenen Ausführungsbeispielen ein Förderdruck im Luftabscheiderbehälter 2 aufbaut, der dem Pumpendruck entspricht. Während des Übernahmebetriebes verbleibt ungeachtet eines gegebenenfalls weiter ansteigenden Milchspiegels im Luftabscheiderbehälter 2 der Schwimmer 10 in seiner oberen Steuerendstellung.

Sinkt gegen Ende des Milchübernahmevorganges aufgrund der Mitförderung oder der Alleinförderung von Luft durch die Übernahmeleitung 3 in den Luftabscheiderbehälter 2 der Milchspiegel ab, dann bewegt sich der in der Milch schwimmende Schwimmer 10 vor einem vollständigen oder teilweisen Öffnen des Entlüftungsventils 9 abwärts und nähert sich seiner unteren Steuerendstellung. Ungeachtet der in der ihn umgebenden Milch enthaltenen Luft und der sich daraus für die umgebende Milchmenge ergebenden Dichte taucht der Schwimmer 10 in die Milch so weit ein, daß seine Eintauchtiefe gleichbleibend jenem Maß entspricht, das auch bei vollständig entgaster, ihn umgebender Milch erreicht würde. Ungeachtet des effektiven Niveaus des Milchspiegels von mit Luft durchsetzter Milch, der sich je nach Ausmaß der in der Milch enthaltenen Luftmenge oberhalb des Eichbereiches 12 befindet, führt der Schwimmer bei Erreichen seiner unteren vorgegebenen Steuerendstellung ein Abbrechen der Förderung von Milch aus dem Luftabscheiderbehälter 2 herbei, womit der Übernahmevorgang beendet ist. Entgast die mit Luft vermischte Restmilchmenge im Anschluß an die Beendigung des Übernahmevorganges, so sinkt der Milchspiegel auf eine Stellung stets innerhalb des Eichbereiches 12 ab, so daß bei einem nachfolgenden Milchübernahmevorgang ein eichgenauer Ausgangszustand für den Übernahme- und den Meßvorgang gegeben ist.

Wenngleich die Zeichnungen bevorzugte Ausführungsbeispiele wiedergeben, so versteht sich doch, daß im Rahmen der Erfindung zahlreiche Abwandlungen möglich sind. So kann grundsätzlich die Kontur des Luftabscheiderbehälters beliebig gewählt werden, sofern nur die Kontur des Schwimmers entsprechend angepaßt und dadurch sichergestellt wird, daß das oben angeführte Verhältnis der Querschnittsflächen eingehalten ist. Bei Luftabscheiderbehältern für Übernahmevorrichtungen, die zur Übernahme von im wesentlichen gleichbleibenden Annahmemindestmengen bestimmt sind, kann die Bildung eines Bereiches mit verringerter Querschnittsfläche entfallen. Der Bereich verringerter Querschnittsfläche kann anstelle wie dargestellt etwa auf halber Höhe des Hauptteils 5, 5′ irgendwo im oberen Zweidrittelbereich der Höhe des Luftabscheiderbehälters 2 angeordnet werden und z. B. auch von einer Querschnittseinschnürung am oberen Ende des Luftabscheiderbehälters 2 gebildet sein. Bei der Ausführung nach Fig. 2 ist der zusätzliche Verdrängerkörper 17 nicht unbedingt erforderlich, jedoch erleichtert seine Einsetz- und Herausnehmbarkeit das Einsetzen des verhältnismäßig großvolumigen Schwimmers 10 von oben her.

**Patentansprüche**

1. Verfahren zur Übernahme von Milch aus Milchbehältern in einen Sammelbehälter, bei dem die Milch durch eine Pumpe aus dem Milchbehälter angesaugt, über Förderleitungen erst durch einen als Ausweitung des durchströmbaren Förderquerschnitts die Strömungsgeschwindigkeit in der Milch in seinem Bereich herabsetzenden Luftabscheider (1) gefördert und dann durch einen Durchlaufzähler in den Sammelbehälter gefördert wird, wobei eine Förderung von Milch aus dem Luftabscheiderbehälter (2) bei Beginn eines Übernahmevorgangs aufgebaut wird, wenn der Milchspiegel aus einer unteren, am Ende eines vorhergehenden Übernahmevorganges herbeigeführten, innerhalb eines in dem oberen Zweidrittelbereich der Höhe des Luftabscheidebehälters (2) vorgesehenen Eichbereiches (12) gelegenen Stellung ansteigt sowie gegen Ende des Milchübernahmevorganges so abgebrochen wird, daß nach Abschluß der Milchübernahme der Milchspiegel wieder die untere Stellung im Eichbereich einnimmt, dadurch gekennzeichnet, daß bei Annäherung des sinkenden Milchspiegels an den Eichbereich (12) die Masse zumindest der im Hauptteil (5) des Luftabscheiderbehälters (2) enthaltenen, nicht entgasten Milch fortlaufend densimetrisch ermittelt und die den Milchübernahmevorgang beendende Förderung der Milch aus dem Luftabscheiderbehälter (2) in Abhängigkeit von dem Erreichen eines vorgegebenen Mindestwertes der Masse der densimetrisch erfaßten, nicht entgasten Milch abgebrochen wird.

2. Verfahren nach Anspruch 1, dadurch gekennzeichnet, daß in an sich bekannter Weise die Milch in Abhängigkeit von einem im Luftabscheider (1) herrschenden Förderdruck aus dem Luftabscheiderbehälter (2) herausgedrückt, der Förderdruck im Luftabscheiderbehälter (2) bei Beginn eines Übernahmevorganges von Atmosphärendruck auf Pumpendruck aufgebaut sowie am Ende des Milchübernahmevorganges von Pumpendruck auf Atmosphärendruck abgebaut und der Druckauf- und -abbau durch Schließen bzw. Öffnen einer Verbindung des Luftraumes über den Milchspiegel im Luftabscheiderbehälter (2) zur Umgebung hin vorgenommen wird, und daß der Förderdruck bei Erreichen des vorgegebenen Mindestwertes auf Atmosphärendruck abgebaut wird.

3. Vorrichtung zur Übernahme von Milch aus Milchbehältern in einen Milchsammelbehälter, bestehend aus einer in eine Übernahmeleitung eingeschalteten Pumpe, einem Durchlaufzähler und einem dem Durchlaufzähler vorgeordneten Luftabscheiderbehälter (2) mit einem im oberen Zweidrittelbereich seiner Höhe vorgesehenen, in einem Teil des Luftabscheiderbehälters mit verringerter lichter, von Milch durchströmbarer Querschnittsfläche gelegenen Eichbereich (12) für Eichstellungen des Milchspiegels, wobei der Luftabscheiderbehälter (2) eine in oder nahe bei dessen Oberteil (7) einmündende Zuleitung (3) aufweist, an seinem Bodenteil (6) an die den Durchlaufzähler enthaltene Förderleitung (4) angeschlossen ist, an seinem Oberteil (7) ein Entlüftungsventil (9) besitzt sowie einen begrenzt vertikal auf- und abbeweglichen Schwimmer (10) enthält, welcher bei Erreichen einer vorgegebenen unteren Steuerendstellung eine Beendigung der Milchförderung aus dem Luftabscheider (1) herbeiführt, dadurch gekennzeichnet, daß zumindest in der Steuerendstellung des Schwimmers (10) zum Zeitpunkt der Beendigung der Milchförderung das Verhältnis der Querschnittsfläche des Schwimmers (10) zu der von Milch durchströmbaren lichten Querschnittsfläche des Luftabscheiderbehälters (2) in allen Querschnittsebenen des vom Schwimmer (10) zumindest in nicht vollständig entgaster Milch eingenommenen Höhenbereiches im wesentlichen gleich ist, der Schwimmer in dieser Stellung bis in den unteren Bereich des Hauptteils (5, 5′) des Luftabscheiderbehälters herabreicht und mit seinem oberen Teil (19) über den höchsterreichbaren Milchspiegel vorsteht.

4. Vorrichtung nach Anspruch 3, dadurch gekennzeichnet, daß der Luftabscheiderbehälter (2) einen Hauptteil (5) mit einer über seine Höhe zumindest im wesentlichen gleichbleibenden oder sich lediglich regelmäßig unter Gleichhaltung des Verhältnisses zu der entsprechenden Querschnittsfläche des Schwimmers ändernden, von Milch durchströmbaren Querschnittsfläche aufweist und der Bereich verringerter Querschnittsfläche von einem in den in den Hauptteil (5) des Luftabscheiderbehälters (2) eingesetzten Verdrängerkörper (13) gebildet ist, der nach außen mit der Wand des Luftabscheiderbehälters einen äußeren Durchtrittskanal (14) begrenzt und nach innen eine den oberen Teil (19) des Schwimmers (10) umfassende Durchlaßöffnung (15) umgrenzt, die zumindest über die Höhe des Eichbereiches eine gleichbleibende Querschnittsfläche besitzt.

5. Vorrichtung nach Anspruch 3, dadurch gekennzeichnet, daß zur Bildung des Bereiches verringerter Querschnittsfläche der Luftabscheiderbehälter (2) eine Wandeinziehung (16) aufweist, die Wandeinziehung eine Durchlaßöffnung umgrenzt, die zumindest über die Höhe des Eichbereiches eine gleichbleibende Querschnittsfläche besitzt, und der Behälterbereich oberhalb der Wandeinziehung mit dem unterhalb derselben gelegenen Behälterbereich durch einen Strömungskanal (14′) für Milch verbunden ist.

6. Vorrichtung nach Anspruch 5, dadurch gekennzeichnet, daß in Höhe der Wandeinziehung (16) des Luftabscheiderbehälters (2) ein die lichte von Milch durchströmbare Querschnittsfläche des Luftabscheiderbehälters herabsetzender zusätzlicher Verdrängerkörper (17) eingesetzt ist, der nach innen eine Durchlaßöffnung (18) umgrenzt, die zumindest über die Höhe des Eichbereiches eine gleichbleibende Querschnittsfläche besitzt.

7. Vorrichtung nach einem oder mehreren der Ansprüche 3 bis 6, dadurch gekennzeichnet, daß der Schwimmer (10) in an sich bekannter Weise mittels einer Schwimmerstange (11) das Entlüftungsventil (9) unmittelbar betätigt.

8. Vorrichtung nach einem oder mehreren der Ansprüche 3 bis 6, dadurch gekennzeichnet, daß der Schwimmer (10) elektrische Schalter betätigt oder deren Betätigung auslöst.

9. Vorrichtung nach Anspruch 8, dadurch gekennzeichnet, daß die schwimmergesteuerten elektrischen Schalter einen Elektroantrieb für das Entlüftungsventil (9) und/oder die Pumpe und/oder ein Ventil in der Förderleitung vor oder hinter dem Luftabscheiderbehälter (2) betätigen.

**Claims**

1. Method for the transfer of milk from milk containers into a collecting container in which by means of a pump the milk is being sucked from the milk container and fed, via feed lines, initially through a deaerator (1) reducing the rate of flow of the milk therein by an enlarged cross section of flow and then through a flow meter into the collecting container, whereby a feeding of milk from the deaerator vessel (2) is being built up at the beginning of a transfer operation, when the milk surface level rises from a low level established at the termination of a previous transfer operation and situated within a calibration region (12) provided in the upper two thirdszone of the height of the deaerator vessel (2), and is interrupted towards the end of the milk transfer operation in such manner that after the termination of the milk transfer the surface of the milk resumes said low level within the calibration region, characterised in that as the sinking milk level approaches the calibration region (12) the mass of the not degassed milk contained at least in the main portion (5) of the deaerator vessel (2) is continuously densimetrically detected and the feeding of milk from the deaerator vessel (2) terminating the milk transfer ist interrupted in response to the attainment of a preset minimum mass value of the densimetrically detected not degassed milk.

2. Method according to claim 1, characterised in that the milk is fed in per se known manner from the deaerator vessel (2) as a function of a feed pressure prevailing in the deaerator (1), the feed pressure in the deaerator vessel (2) is built up at the beginning of a transfer operation from atmospheric pressure to pump pressure, and at the end of the milk transfer operation is reduced from pump pressure to atmospheric pressure and the build-up and drop in pressure is achieved by closing or opening a connection between the airspace above the surface of the milk in the deaerator vessel (2) and the environment, and in that the feed pressure is reduced to atmospheric pressure upon reaching the preset minimum value.

3. Apparatus for the transfer of milk from milk containers into a milk collecting container, comprising a pump installed in a transfer line, a flow meter and, located upstream of said flow meter, a deaerator vessel (2) having in the upper two thirds zone of the height thereof in a portion of reduced clear cross sectional area through which milk can flow a calibration region (12) for calibration positions of the milk level, said deaerator vessel (2) comprising a supply line (3) opening into or close to the top portion (7) thereof, having the base portion (6) thereof connected to the feed line (4) comprising the flow meter, an air-exhaust valve (9) at the top portion (7) and a float (10) limitedly vertically movable up and down and effecting termination of milk feeding from the deaerator (1) when reaching a preset lower control end position, characterised in that at least in the control end position of the float (10) at the instant of terminating milk feeding the relationship of the cross sectional area of the float (10) to the clear cross sectional area of the deaerator vessel (2) through which the milk can flow is substantially the same in all cross sectional planes occupied by the float (10) at least in not fully degassed milk, the float in this position extends into the lower zone of the main portion (5, 5') of the deaerator vessel and with its upper part (19) projects beyond the highest possible milk surface level.

4. Apparatus according to claim 3, characterised in that the deaerator vessel (2) comprises a main portion (5) having a cross sectional area for the through-flow of milk at least substantially constant over its height or merely regularly varying while maintaining the proportion to the corresponding cross sectional area of the float, and in that the protion of reduced cross sectional area is formed by a replacement body (13) inserted in the main portion (5) of the deaerator vessel (2) and together with the wall of the deaerator vessel (2) outwardly defining an outer flow channel (14) and inwardly a flow opening (15) surrounding the upper part (19) of the float (10) and having a cross sectional area constant at least over the height of the calibration region.

5. Apparatus according to claim 3, characterised in that the deaerator vessel (2) comprises a wall constriction (16) to form the portion of reduced cross sectional area, the wall constriction defines a flow opening having a constant cross sectional area at least over the height of the calibration region and the vessel portion above the wall constriction is connected with the portion situated below said constriction by a flow channel (14') for the milk.

6. Apparatus according to claim 5, characterised in that a further replacement member (17) reducing the clear cross sectional area for the flow of milk of the deaerator vessel is inserted into the wall constriction (16) of said vessel (2), said replacement member (17) inwardly defining a flow opening (18) having an area of constant cross section at least over the height of the calibration region.

7. Apparatus according to one or more of claims 3 to 6, characterised in that float (10) directly operates the air-exhaust valve (9) in per se known manner by means of a float rod (11).

8. Apparatus according to one or more of claims 3 to 6, characterised in that float (10) operates or releases the operation of electrical switches.

9. Apparatus according to claim 8, characterised in that the float controlled electrical switches operate an electrical drive for the air-exhaust valve (9) and/or the pump and/or a valve in the feed line upstream or downstream of the deaerator vessel (2).

**Revendications**

1. Procédé pour transvaser du lait de récipients à lait dans un récipient collecteur selon lequel le lait est aspiré du récipient à lait par une pompe, est refoulé par des conduites de transfert tout d'abord par un séparateur d'air (1) qui, à titre d'élargissement de la section de transfert traversée par le lait diminue la vitesse d'écoulement du lait dans sa région puis par un débitmètre dans le récipient collecteur, un transfert du lait hors du récipient séparateur d'air (2) se produisant au début d'une opération de transvasement lorsque le niveau du lait monte à partir d'une position inférieure, établie au terme d'une opération de transvasement précédente, située dans une zone de jaugeage (12) prévue dans la zone supérieure des deux tiers de la hauteur du récipient séparateur d'air, et étant interrompu, à la fin de l'opération de transvasement du lait, de telle sorte que lorsque ce transvasement est terminé, le niveau du lait revienne dans sa position inférieure dans la zone de jaugeage, caractérisé en ce que lorsque le niveau du lait qui descend se rapproche de la zone de jaugeage (12), la masse au moins du lait non dégazé contenue dans la partie principale (5) du récipient séparateur (2) est déterminée par voie densimétrique de manière continue et le refoulement du lait hors du récipient séparateur d'air (2) qui termine l'opération de transvasement est interrompu en fonction du fait que la masse du lait non dégazé déterminée par voie densimétrique atteint une valeur minimum pré-établie.

2. Procédé suivant la revendication 1, caractérisé en ce que le lait est refoulé d'une manière connue, en fonction de la pression de refoulement qui s'établit dans le séparateur d'air (1), hors du récipient séparateur d'air (2), la pression de refoulement dans le récipient séparateur d'air (2) au début d'une opération de transvasement passe de la pression atmosphérique à la pression de pompage et, à la fin de l'opération de transvasement, de la pression de pompage à la pression atmosphérique et l'augmentation ainsi que la diminution de la pression sont assurées, par la fermeture et l'ouverture d'une communication de l'espace d'air se trouvant au-dessus du niveau de lait dans le récipient séparateur d'air (2) avec l'atmosphère ambiante et la pression de refoulement est abaissée à la valeur de la pression atmosphérique lorsque la valeur minimum pré-établie est atteinte.

3. Appareil pour transvaser du lait à partir de récipients à lait dans un récipient collecteur de lait, formé d'une pompe branchée dans une conduite de transvasement, d'un débitmètre et d'un récipient séparateur d'air (2) précédant le débitmètre et présentant, dans la zone supérieure du deuxième tiers de sa hauteur, une zone de jaugeage (12) pour des positions de jaugeage du niveau du lait située une partie de récipient séparateur d'air présentant une section de passage libre restreinte pour l'écoulement du lait, le récipient séparateur d'air (2) présentant une conduite d'amenée (3) qui débouche dans sa partie supérieure (7) ou au voisinage de celle-ci, une conduite de refoulement (4) raccordée à sa partie inférieure (6) et contenant le débitmètre, une valve de purge d'air (9) dans sa partie supérieure (7) et un flotteur (10) mobile verticalement vers le haut et vers le bas sur une distance limitée, ce flotteur, lorsqu'il atteint une position extrême de commande inférieure pré-établie, provoquant l'interruption du refoulement du lait hors du séparateur d'air (1), caractérisé en ce qu'au moins dans la position extrême de commande du flotteur (10), au terme du transfert du lait, le rapport de la section du flotteur (10) à celle du passage libre du récipient séparateur d'air (2) pour le lait dans tous les plans de coupe de la zone en hauteur occupée par le flotteur (10), au moins dans du lait qui n'est pas entièrement dégazé, est essentiellement constant, le flotteur descend dans cette position jusque dans la zone inférieure de la partie principale (5, 5') du récipient séparateur d'air et s'étend par sa partie supérieure (19) au-dessus du niveau le plus élevé que le lait peut atteindre.

4. Appareil suivant la revendication 3, caractérisé en ce que le récipient séparateur d'air (2) comporte une partie principale (5) présentant une section pouvant être traversée par le lait qui reste au moins en substance constante sur toute sa hauteur ou qui varie simplement de manière régulière tout en maintenant constant le rapport avec la section correspondante du flotteur et la zone de section diminuée est formée par un corps de déplacement (13) logé dans la partie principale (5) du récipient séparateur d'air (2), ce corps délimitant vers l'extérieur, au moyen de la paroi du récipient séparateur d'air, un canal de passage extérieur (14) et entourant vers l'intérieur une ouverture de passage (15) encerclant la partie supérieure (19) du flotteur (10), cette ouverture présentant une section constante sur toute la hauteur de la zone de jaugeage.

5. Appareil suivant la revendication 3, caractérisé en ce que pour former la zone dont la section est diminuée, le récipient séparateur d'air (2) présente un resserrement (16) de sa paroi qui encercle l'ouverture de passage qui présente une section constante au moins sur toute la hauteur de la zone de jaugeage et la zone du récipient située au-dessus du resserrement est raccordée par un canal d'écoulement (14') pour le lait à la zone sous-jacente du récipient.

6. Appareil suivant la revendication 5, caractérisé en ce qu'à hauteur du resserrement (16) de la paroi du récipient séparateur d'air (2) est prévu un corps de déplacement supplémentaire (17) qui réduit le passage de la section du récipient séparateur d'air pouvant être traversée par le lait, ce corps délimitant vers l'intérieur une ouverture de passage (18) qui présente une section constante au moins sur toute la hauteur de la zone de jaugeage.

7. Appareil suivant l'une quelconque des revendications 3 à 6, caractérisé en ce que le flotteur (10) actionne d'une manière connue directement la valve de purge d'air (9) au moyen d'une tige de flotteur (11).

8. Appareil suivant l'une quelconque des revendications 3 à 6, caractérisé en ce que le flotteur (10) actionne des commutateurs électriques ou déclenche leur actionnement.

9. Appareil suivant la revendication 8, caractérisé en ce que les commutateurs électriques commandés par le flotteur actionnent un mécanisme d'entraînement électrique pour la valve de purge d'air (9) et/ou la pompe et/ou une valve située dans la conduite de refoulement ou de transfert en amont ou en aval du récipient séparateur d'air (2).

Fig.1
1
2
3
4
5
6
7
8
9
10
11
12
13
14
15
19
20
21
22
23

Fig. 2
9
1
8
7
2
19
11
3
5'
17
18
12
16
14'
24
22
5'
10
20
21
6
4